Europäisches Patentamt

European Patent Office

Office européen des brevets

(11) Publication number: **0 347 164**
**A2**

# EUROPEAN PATENT APPLICATION

(21) Application number: 89305953.5

(51) Int. Cl.⁴ **H04M 1/50 , H04M 1/31**

(22) Date of filing: **13.06.89**

(30) Priority: **14.06.88 JP 147204/88**

(43) Date of publication of application:
**20.12.89 Bulletin  89/51**

(84) Designated Contracting States:
**DE FR GB**

(71) Applicant: **NEC CORPORATION**
**33-1, Shiba 5-chome, Minato-ku**
**Tokyo 108(JP)**

(72) Inventor: **Fujii, Takashi**
**c/o NEC corp. 33-1, Shiba 5-Chome**
**Kinato-ku Tokyo(JP)**

(74) Representative: **Brown, David Alan et al**
**MATHYS & SQUIRE 10 Fleet Street**
**London EC4Y 1AY(GB)**

(54) **Dialer semiconductor integrated circuit.**

(57) A dialer semiconductor integrated circuit is comprised of a microprocessor, an interface to the microprocessor, and an input device effective to define desired function.

FIG.I

EP 0 347 164 A2

## DIALER SEMICONDUCTOR INTEGRATED CIRCUIT

### BACKGROUND OF THE INVENTION

The present invention relates to dialer semiconductor integrated circuit (hereinafter, referred to as "dialer"), and specifically relates to dialer provided with microprocessor interface.

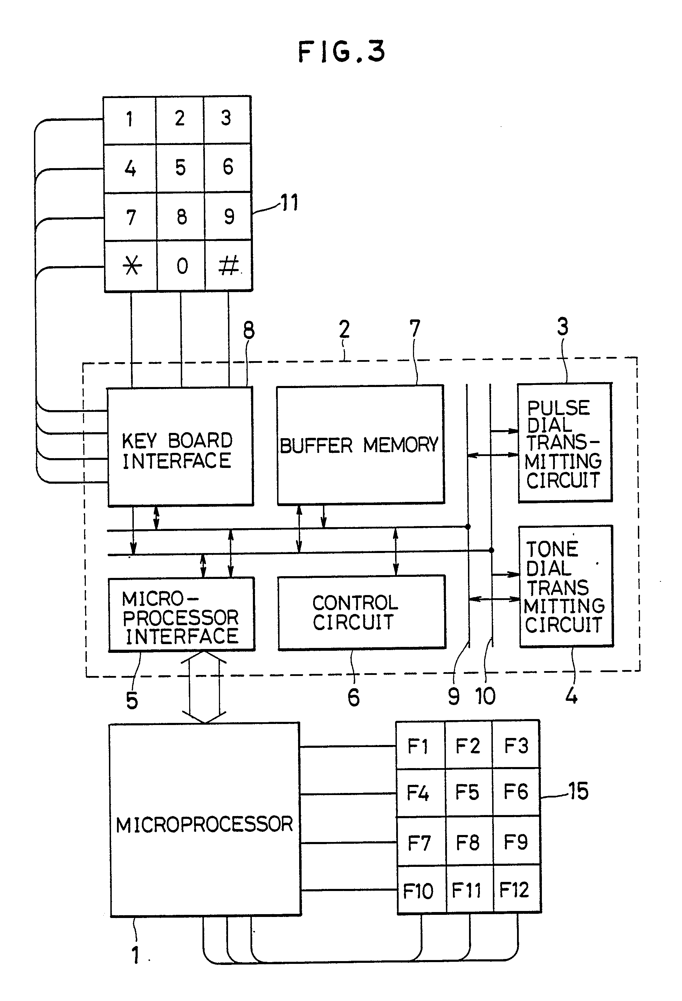

In constructing multi-function telephone, as shown in Fig. 3, a microprocessor 1 and a dialer 2 are often utilized. In such case, the microprocessor 1 carries out various functions of the multi-functional telephone and control of peripheral circuits, while the dialer 2 carries out transmit of dial signal. Accordingly, the dialer 2 needs an interface 5 to the microprocessor 1, means for transmitting dial signal (pulse dial transmitting circuit 3 and tone dial transmitting circuit 4), a key board interface 8 and a control circuit 6. Further, in view of the power supply failure, it is desirable to provide minimum dial function to the dialer even when the interface 5 is disconnected from the microprocessor 1. For this, the dialer 2 is needed to have an interface 8 to the key board 11 and a buffer memory 7 for storing input from the key board 11. Conventionally, such type of the dialer 2 is constructed to have interface, as the interface 8 to the key board, to the key board 11 having keys for data of dial signal, and to the other key board 15 having function keys of limited function such as redial key and repertory dial key.

In recent years, telephone has been modified to have more and more multi-function, and at the same time, in order to meet various needs of users, individualization and differentiation has been agressively undertaken. Such multi-functional telephone of the various types is provided with specific keys to effect individual function in each type. The above described conventional dialer is provided with an interface to keys of limited function. Therefore, the microprocessor side has to be provided with an interface to keys effective to carry out such individualized specific function. However, when the interface to keys is provided in the microprocessor side, a port for the interface and program for processing key input are needed, thereby consuming precious source of the microprocessor.

### SUMMARY OF THE INVENTION

An object of the present invention is to, therefore, eliminate the drawbacks of prior art. According to the present invention, the dialer semiconductor integrated circuit having interface to the microprocessor is provided with input means to determine desired functions. By this, while the load of microprocessor can be reduced, individualized function of telephone can be realized.

### BRIEF DESCRIPTION OF THE DRAWINGS

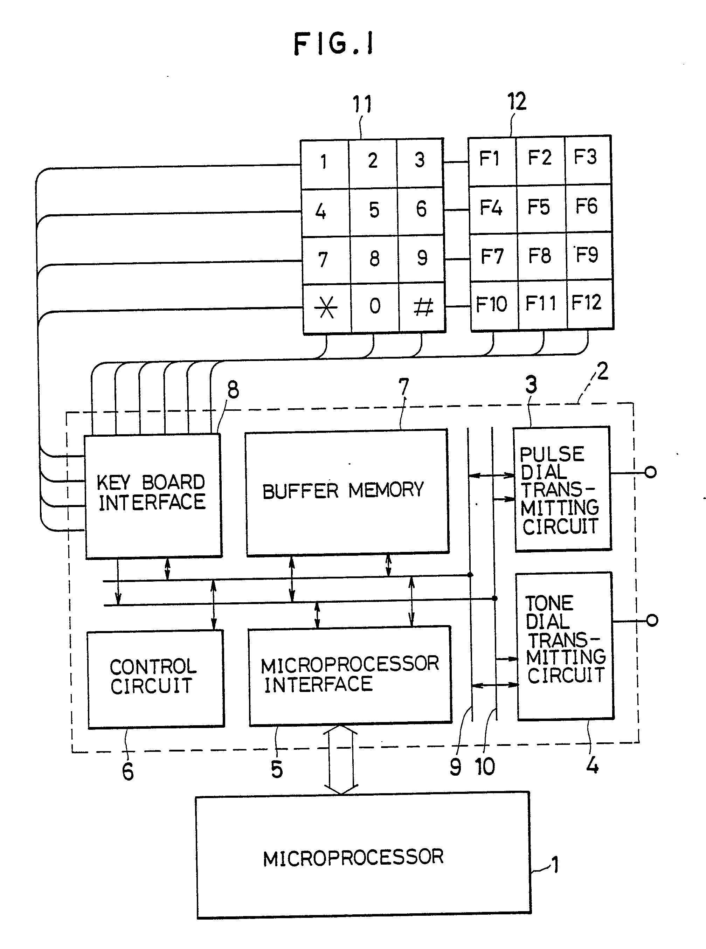

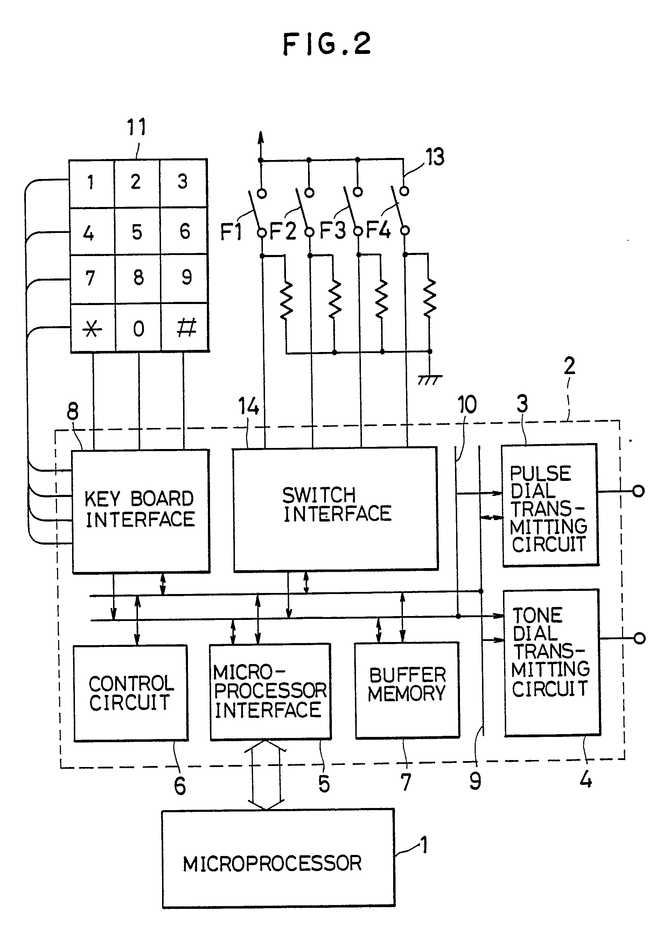

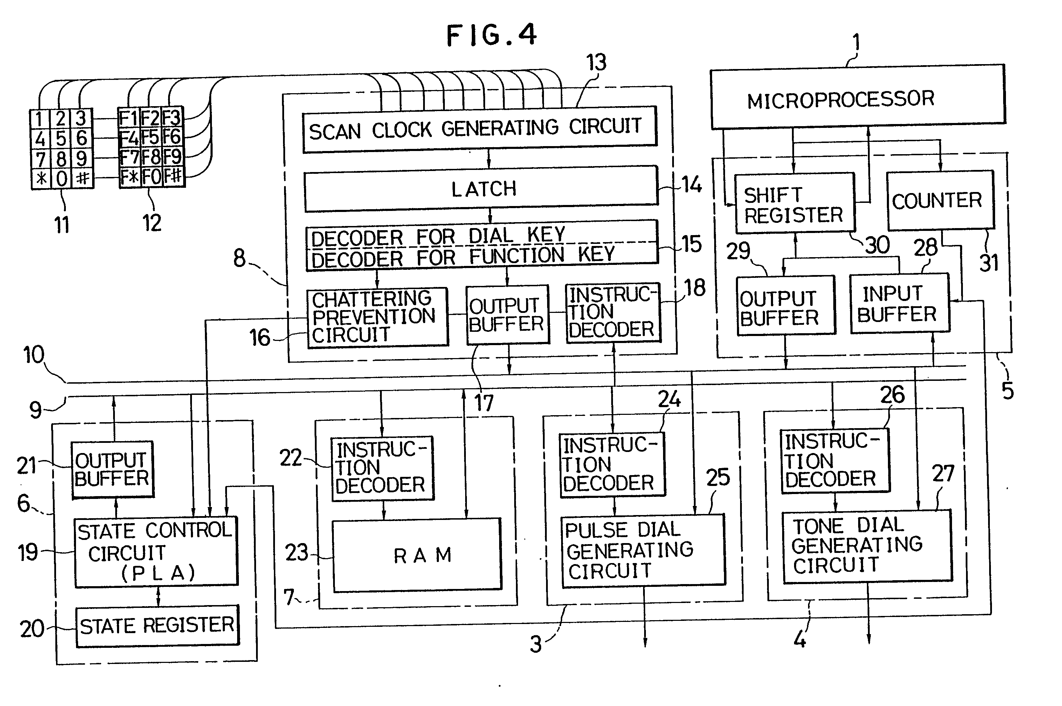

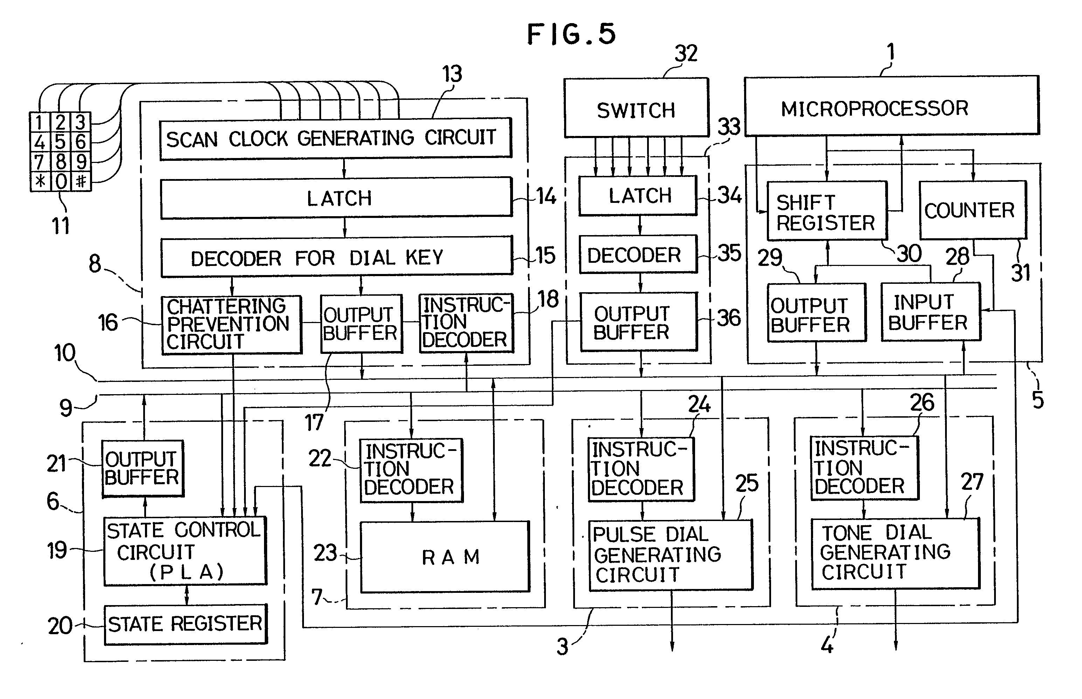

Fig. 1 is a block diagram of one embodiment according to the present invention; Fig. 2 is a block diagram of another embodiment according to the present invention; Fig. 3 is a block diagram showing the prior art; Fig. 4 is a block diagram showing detailed circuit structure of the Fig. 1 embodiment; and Fig. 5 is a circuit diagram showing detailed circuit structure of the Fig. 2 embodiment.

### DETAILED DESCRIPTION OF PREFERRED EMBODIMENTS

Next, the present invention will be explained in detail with reference to the drawings.

Fig. 1 is a block diagram of one embodiment according to the present invention, and Fig. 4 is a block diagram showing detailed circuit structure of Fig. 1 embodiment. Referring to Fig. 1, numeral 1 refers to microprocessor, and numeral 2 refers to dialer. Numeral 3 denotes pulse dial transmitting circuit, numeral 4 denotes tone dial transmitting circuit, numeral 5 denotes microprocessor interface, numeral 6 denotes control circuit, numeral 7 denotes memory for dial buffer, numeral 8 denotes interface circuit to key board, numeral 9 denotes control bus inside the dialer, and numeral 10 denotes data bus. Numeral 11 denotes key board for dial data, and numeral 12 denotes key board for function keys to which the user define desired function.

Referring to Fig. 4, the same portion to that of Fig. 1 is numbered by the same reference numeral. When data is inputted from the key board 11 for dial data, scan clock generating circuit 13 detects the fact that the key board is pushed, and the data is latched into latch circuit 14. The latched data is decoded by decoder 15 for dial key, then chattering prevention circuit 16 counts a predetermined time interval, and thereafter, the data is transferred to output buffer 17. At the same time, interrupt signal is applied to control circuit 6 from the chattering prevention circuit. State control circuit 19 is sequence control circuit comprised of PLA and so on. When the circuit 19 receives the interrupt signal, the circuit operates to retrieve the data from the output buffer 17 and then to transfer the data to RAM 23 after confirming that the data is dial key data. Hereinafter in similar operation, data inputted from the key board 11 for dial data is successively written into the RAM 23. Further, the data of RAM is successively transferred through the control circuit 6 to either of pulse dial generating circuit 25 and tone dial generating circuit 27, and is transmitted outside as dial signal. On the other hand, data inputted from the key board 12 for function key is transferred into the output buffer 17 in similar manner as in the case of dial data. The state control circuit 19 operates when receiving interrupt signal to retrieve data from the output buffer 17, and then to transfer the data to microprocessor interface 5 after confirming that the data is function key data. In the microprocessor interface, the data is firstly stored into input buffer 28, and thereafter the data is transferred to shift register 30. The shift register operates in synchronization with clock from microprocessor 1 to serially transfer the data to the microprocessor. The key board 12 for function key is assigned with desired function keys such as store key and recall key for repertory dial, redial key, hold key for placing a call on hold, and recording and reproducing keys in automatically responding telephone for use in case of absence. When using serial interface between the microprocessor and the dialer as in this embodiment, the interface operation can be carried out by several signal lines, thereby significantly reducing the number of external lead terminals as compared to the prior art in which the external lead terminals of microprocessor is provided with interface of the function key. Moreover, in this embodiment, the key board interface 8 includes chattering prevention circuit so that the microprocessor is applied with only the confirmed input data. Accordingly, the microprocessor is not needed to contain program for use in checking of the double touching of key and in prevention of error operation due to chattering which would be needed in the prior art, thereby reducing the step number of marking additional program and reducing the ROM capacity.

Fis. 2 is a block diagram of another embodiment according to the present invention, and Fig. 5 is a detailed circuit diagram of Fig. 2. The same portion as in Figs. 1 and 4 is numbered by the same reference numerals. Particularly in Fig. 5, numeral 32 denotes switch to which the user can define desired function, and numeral 33 denotes interface circuit for the switch. In the Fig. 5 embodiment, the operation in case of pressing dial key is identical to that in case of the Fig. 4 embodiment. Further, when the switch 32 is pressed, the data is latched by latch circuit 34, decoded by decoder 35, and stored into output buffer 36. Hereafter, as similar to the Fig. 4 embodiment, the data is transferred to the microprocessor interface 5 by the controller 6, and then the data is transferred to the microprocessor 1 through serial interface. In the Fig. 5 embodiment, as in similar manner to the Fig. 4 embodiment, there is achieved the advantages such as reduction of port of microprocessor, reduction of step number of making additional program, and reduction of ROM capacity.

## Claims

A dialer semiconductor integrated circuit for achieving a dial-function together with a numeral key-board, a functional key-board and a microprocessor, comprising a pulse-dial transmitting circuit, a tone-dial transmitting circuit, a key-board interface circuit for coupling said dialer semiconductor integrated circuit with said numeral key-board and said functional key-board and a microprocessor interface circuit for coupling said dialer semiconductor integrated circuit with said microprocessor.

# FIG. 1

# FIG.2

# FIG.3

| 1 | 2 | 3 |
|---|---|---|
| 4 | 5 | 6 |
| 7 | 8 | 9 |
| ✳ | 0 | #. |

11

8      2    7         3

| KEY BOARD INTERFACE | BUFFER MEMORY | PULSE DIAL TRANS- MITTING CIRCUIT |
|---|---|---|

| MICRO- PROCESSOR INTERFACE | CONTROL CIRCUIT | TONE DIAL TRANS MITTING CIRCUIT |
|---|---|---|

5            6      9 10      4

| MICROPROCESSOR | F1 | F2 | F3 |
| | F4 | F5 | F6 |
| | F7 | F8 | F9 |
| | F10 | F11 | F12 |

15

1

## FIG.4

EP 0 347 164 A2

FIG.5